# EUROPÄISCHE PATENTSCHRIFT

(11) **EP 1 735 245 B1**
(45) Veröffentlichungstag und Bekanntmachung des Hinweises auf die Patenterteilung: **23.01.2008**
(21) Anmeldenummer: 05739515.4
(22) Anmeldetag: 18.03.2005
(51) Int. Cl.: C02F 1/70, C01B 5/00

(54) **KATALYTISCHE ENTFERNUNG VON GELÖSTEM SAUERSTOFF AUS ORGANISCHEN FLÜSSIGKEITEN**
CATALYTIC REMOVAL OF DISSOLVED OXYGEN FROM ORGANIC LIQUIDS
ELIMINATION CATALYTIQUE D'OXYGENE DISSOUS DANS DES LIQUIDES ORGANIQUES

(30) Priorität: 14.04.2004 DE 102004017983
(43) Veröffentlichungstag der Anmeldung: 27.12.2006
(73) Patentinhaber: Evonik Degussa GmbH, 40474 Düsseldorf (DE)
(72) Erfinder: REDLINGSHÖFER, Hubert, 91481 Münchsteinach (DE); DÖRFLEIN, Andreas, 63538 Grosskrotzenburg (DE); WECKBECKER, Christoph, 63584 Gründau (DE)
(86) Internationale Anmeldenummer: PCT/EP2005/002921
(87) Internationale Veröffentlichungsnummer: WO 2005/100263

(56) Entgegenhaltungen:
- WO-A-01/85622
- WO-A-85/02173
- J.S. MOON, K.K. PARK, S.W. YUN, G. SEO: "A study of the application of a new dissolved oxygen removal system using activated carbon fiber cartridge catalyst" OFFICIAL PROCEEDINGS - INTERNATIONAL WATER CONFERENCE, Bd. 61, 2000, Seiten 186-204, XP008050162 in der Anmeldung erwähnt

## Beschreibung

Die vorliegende Erfindung betrifft ein Verfahren zur Entfernung von gelöstem Sauerstoff aus organischen Flüssigkeiten unter Nutzung eines Feststoffkatalysators. Der gelöste Sauerstoff wird dabei durch die Einwirkung eines Reduktionsmittels zu Wasser umgesetzt.

Insbesondere die Anwesenheit von gelöstem Sauerstoff in organischen Flüssigkeiten, die in chemischen Prozessen in extrem hohen Mengen von mehreren Tonnen pro Stunde eingesetzt werden, kann zu Korrosion von Anlagenteilen oder zu unerwünschten Nebenreaktionen mit weiteren Einsatzstoffen führen. Dazu reichen aufgrund der hohen Durchsätze bereits die im ppm-Bereich enthaltenen Sauerstoffmengen aus. In den meisten chemischen Prozessen liegen zudem hohe Temperaturen und hohe Drücke vor, die unerwünschte Reaktionen des gelösten Sauerstoffs mit anderen Einsatzstoffen fördern.

Bekannt ist bereits die Entfernung von gelöstem Sauerstoff aus Wasser (K. Matt, Wasserstoff schützt Dampfkreisläufe vor Korrosion, Chemie-Technik 20 (10), 44-45, 1991 / A. Brehm, U. Antons, Reduktion von in Wasser gelöstem Sauerstoff unter Verwendung eines Fließbettreaktors, Chemie Ingenieur Technik 70 (1+2), 176-181, 1998). Diese Maßnahme wird vorwiegend eingesetzt, um in Wasserkreisläufen die Korrosion von Rohrleitungen und Apparaten zu verhindern.

Ein katalytisches Verfahren zur Entfernung von Sauerstoff aus Seewasser, das anschließend in unterirdische Ölreservoirs eingeleitet wird, wird in der WO 01/85622 beschrieben.

Prinzipiell sind bei der Sauerstoffentfernung physikalische und chemische Methoden zu unterscheiden. Zu den physikalischen Verfahren gehören die thermische Entgasung, Strippen, Entgasen mittels Evakuieren oder Kombinationen dieser Verfahren. Allerdings sind die physikalischen Verfahren durch hohe Investitionskosten und erheblichen Energieverbrauch bei großen Durchsätzen gekennzeichnet. Trotzdem sind die Sauerstoffrestkonzentrationen häufig noch zu hoch.

Aus diesen Gründen werden zur Sauerstoffentfernung aus Wasser auch chemische Verfahren eingesetzt. So reagiert der Sauerstoff nach Zusatz von Hydrazin vollständig zu Wasser und Stickstoff. Allerdings ist Hydrazin giftig, ist stark wassergefährdend, wirkt ätzend und kann mit weiteren Inhaltsstoffen unerwünschte Nebenreaktionen eingehen. Weiterhin sind chemische Methoden unter Einsatz von Natriumsulfit oder Aminen bekannt.

Zur chemischen Sauerstoffentfernung aus Wasser können auch katalytische Verfahren an verschiedenen Katalysatoren in Gegenwart von Reduktionsmitteln wie Wasserstoff oder Hydrazin eingesetzt werden (J.-S. Moon, K.-K. Park, S.-W. Yun, G. Seo, A Study on the Application of a new dissolved oxygen removal system using activated carbon fiber cartridge catalyst, Official Proceedings - International Water Conference 61, 186-204, 2000).

Die Entfernung von Sauerstoff aus organischen Flüssigkeiten wird im Stand der Technik kaum beschrieben. Die Dokumente US 4026664 und US 4079018 offenbaren die Entfernung von gelöstem Sauerstoff aus organischem Flüssigkeiten in Wärmeaustauschsysteme.

Soll eine organische Flüssigkeit von gelöstem Sauerstoff befreit werden, so ist vorab sicherzustellen, dass durch den Katalysator oder das Reduktionsmittel keine chemische Reaktion mit der organischen Flüssigkeit eintritt, die zur Bildung von unerwünschten Nebenprodukten führt. Dies könnte den gesamten Produktionsablauf dramatisch stören. Umgekehrt darf auch die zu behandelnde organische Flüssigkeit den verwendeten Katalysator nicht desaktivieren, was beispielsweise durch Ablagerungen eintreten kann. Weiterhin ist die Löslichkeit von Sauerstoff in organischen Flüssigkeiten größer als in Wasser und somit die zu entfernende Menge auch deutlich höher. Beispielsweise löst sich Sauerstoff in Methanol etwa 10 mal besser als in Wasser (J. Tokunaga, solubilities of oxygen, nitrogen, and carbon dioxide in aqueous alcohol solutions, J. Chem. Eng. Data 20, 1, 41-46, 1975 und K. Fischer, M. Wilkens, J. Chem. Thermodynamics, 33, 1285-1308, 2001). Demzufolge müssen sehr aktive Katalysatoren eingesetzt werden, die zudem in der bevorzugten Ausführungsform ohne Wärmezufuhr bei Raum- oder Umgebungstemperatur den Sauerstoff zum Beispiel zu Wasser umsetzen.

Erschwerend kommt bei der Sauerstoffentfernung aus organischen Flüssigkeiten hinzu, dass diese in chemischen Prozessen nicht als Reinsubstanz vorliegen, sondern zumeist einen geringen Teil weiterer organischer und/oder anorganischer Substanzen enthalten, die sich ebenfalls nicht inert verhalten. Wasser hingegen wird bei den nach dem Stand der Technik bekannten Reinigungsverfahren vorwiegend in separaten Heiz- und Kühlkreisläufen ohne Kontakt zu anderen Medien eingesetzt.

Speziell das Vorhandensein von Gemischen mehrerer verschiedener Substanzen in chemischen Anlagen kann die Entfernung von gelöstem Sauerstoff aus den organischen Flüssigkeiten erforderlich machen, wenn diese Gemische mit Sauerstoff unerwünschte Nebenreaktionen eingehen. Beispielsweise kann der gelöste Sauerstoff in einer organischen Flüssigkeit bei Kontakt mit schwefelhaltigen Verbindungen bei höherer Temperatur die Oxidation dieser Verbindungen zu elementarem Schwefel bewirken. Dies kann fatale Folgen haben, wenn sich der elementare Schwefel dann als Feststoff ablagert und Anlagenteile verstopft. Durch die Entfernung des gelösten Sauerstoffs könnte eine erhöhte Verfügbarkeit der Anlagen erzielt werden, was von enormem wirtschaftlichen Interesse ist. Zudem wird auch die Anlagensicherheit erhöht, da es beim Umgang mit Gefahrstoffen dadurch nicht zu Störungen des Anlagenbetriebs kommt.

Weiterhin kann der Eintrag von gelöstem Sauerstoff in Anlagen zur Bildung explosionsfähiger Gemische mit organischen Verbindungen führen, falls sich der eingebrachte Sauerstoff beispielsweise durch Entgasung an Teilen der Anlage anreichert und sich in Kontakt mit organischen Verbindungen befindet.

Aufgabe der vorliegenden Erfindung ist es, ein Verfahren zur katalytischen Entfernung von gelöstem Sauerstoff aus organischen Flüssigkeiten bereitzustellen, sodass die unerwünschten Nebenreaktionen und sicherheitstechnisch gefährlichen Anlagenzustände vermieden werden.

Um den Sauerstoff möglichst kostengünstig zu entfernen, arbeitet das Verfahren bevorzugt ohne thermische Behandlung bei Raum- oder Umgebungs temperatur. Zudem muss der gelöste Sauerstoff nahezu vollständig aus der organischen Flüssigkeit entfernt werden.

Diese Aufgabe wird durch folgendes Vorgehen gelöst: In einem ersten Schritt wird das Reduktionsmittel, Wasserstoff, in die organische Flüssigkeit eingeleitet. Die Art und Weise des Einleitens des Reduktionsmittels ist dabei nicht entscheidend für die Wirksamkeit des Verfahrens, wenn ein ausreichender Stoffaustausch zwischen organischer Flüssigkeit und Reduktionsmittel sichergestellt ist. So kann der Eintrag des Reduktionsmittels auf unterschiedlichen Methoden, wie z. B. durch einen statischen Mischer, eine Blasensäule, einen Fallfilmabsorber, eine Füllkörper- oder Packungskolonne oder einen Strahler erfolgen.

Die Menge des Reaktionsmittels muss mindestens so bemessen sein, dass sie für die Reduktion des vorhandenen Sauerstoffs ausreicht.

Wird mehr an gasförmige Reduktionsmittel als sich in der Flüssigkeit löst eingesetzt, so ist der überschüssige Anteil in einer bevorzugten Ausführung vor dem Kontakt der mit dem Reduktionsmittel gesättigten organischen Flüssigkeit mit dem Katalysator zu entfernen. Dies kann beispielsweise durch eine einfache Gas-Flüssig-Trennung erfolgen. Bei dieser Ausführungsform wird bereits ein Teil des gelösten Sauerstoffs mit dem überschüssigen Reduktionsmittel entfernt.

Anschließend werden die organische Flüssigkeit und das enthaltene Reduktionsmittel mit einem festen Hydrierkatalysator in Kontakt gebracht. Dies wird insbesondere in Festbettreaktoren, in denen der Katalysator als Schüttung vorliegt, durchgeführt.

In einer weiteren Ausführungsform der Erfindung kann das Reduktionsmittel auch ohne vorheriges Eintragen in die organische Flüssigkeit direkt im Reaktor mit der organischen Flüssigkeit und dem Katalysator in Kontakt gebracht werden. Dies verringert den apparativen Aufwand des Verfahrens.

In einer bevorzugten Ausführungsform des Verfahrens wird bei keinem der Schritte zusätzlich Wärme zugeführt. Das Verfahren wird bevorzugt kontinuierlich bei Raum- oder Umgebungstemperatur betrieben. Das Verfahren kann bei Unterdruck, Atmosphärendruck oder Überdruck betrieben werden. Bevorzugt werden Drücke von Atmosphärendruck bis 100 bar angewandt.

Der dafür nötige, sehr aktive Hydrier-Katalysator muss sich jedoch gegenüber der organischen Flüssigkeit vollständig inert verhalten. Umgekehrt darf aber die organische Flüssigkeit den Katalysator nicht desaktivieren. Dafür geeignet erwiesen sich insbesondere kommerziell erhältliche Edelmetall- und Übergangsmetallkatalysatoren, bevorzugt geträgerte Edelmetallkatalysatoren, besonders bevorzugt Pdhaltige Katalysatoren mit Trägern aus Aluminiumoxid, Aktivkohle, Siliziumoxid oder Harzen. Die Korngröße des eingesetzten Katalysators beträgt bevorzugt zwischen 0,2 mm und 10 cm. Ebenso kann der Katalysator in Form einer Beschichtung auf der Wand, auf Einbauten oder auf Trägern vorliegen. Wird der Eintag des Reduktionsmittels bzw. die Durchmischung des Reduktionsmittels mit der organischen Flüssigkeit und die Umsetzung des gelösten Sauerstoffs in einem Apparat durchgeführt, ist auch die Verwendung eines statischen Mischer, der mit Pd-haltigem Katalysator beschichtet ist, sinnvoll.

Als organische Verbindungen sind die bekannten Lösungsmittel oder deren Gemische geeignet, die - falls ungesättigt - unter den Versuchsbedingungen nicht hydriert werden.

Besonders geeignet sind aliphatische Alkohole mit 1 bis 12 C-Atomen, verzweigt oder nicht verzweigt, cyclische oder nicht cyclische Aliphaten, Ether mit Alkylresten mit 1 bis 5 C-Atomen sowie aromatische Kohlenwasserstoffe mit und ohne Substituenten.

Typische organische Flüssigkeiten sind beispielsweise Methanol, Ethanol, Isopropanol, Aceton, Cyclohexanol, Cyclohexan, Ethylacetat, Dimethylformamid, Benzol, Toluol oder Xylole. Der Begriff organische Verbindungen ist aber nicht auf Lösungsmittel beschränkt.

Das erfindungsgemäße Verfahren erweist sich als besonders vorteilhaft, wenn aus flüssigen organischen Verbindungen der gelöste Sauerstoff im wesentlichen entfernt wird und sie anschließend mit schwefelhaltigen organischen Verbindungen oder diese enthaltenden flüssigen oder gasförmigen Gemischen in Kontakt gebracht werden. In diesem Fall scheidet sich kein elementarer Schwefel mehr ab, insbesondere wenn H₂S eingeleitet wird.

Es zeigt sich, dass nach diesem katalytischen Verfahren behandelte organische Flüssigkeiten bei Raumtemperatur nahezu vollständig (< 100 ppb, insbesondere 80 ppb bis 0 ppb) von gelöstem Sauerstoff befreit werden können. Die bevorzugt verwendeten Pd-haltigen Katalysatoren sind bei Raumtemperatur aktiv genug, um den gelösten Sauerstoff in der organischen Flüssigkeit zu entfernen. Selbst Verunreinigungen in organischen Verbindungen behindern die Wirksamkeit des Verfahrens nicht.

Die Sauerstoffentfernung konnte einerseits analytisch durch, die online Sauerstoffmessungen (Prinzip: Clark-Zelle) des Stroms nach dem Katalysator belegt werden. Andererseits kann zum Nachweis des gelösten Sauerstoffs der nach diesem Verfahren behandelten organischen Flüssigkeit eine mit Sauerstoff reagierende weitere Chemikalie (prozessnah wie in chemischen Anlagen) wie beispielsweise Schwefelwasserstoff zugesetzt werden. Ob die Oxidation mit Sauerstoff zu elementarem Schwefel eintritt, kann dann beispielsweise durch HPLC-Analyse der organischen Flüssigkeit auf elementaren Schwefel überprüft werden.

### Beispiele

### Vergleichsbeispiel:

Mittels einer Pumpe wurden kontinuierlich 4 1/h Methanol in einen Glaskolben dosiert. In den Kolben wird über eine Fritte weiterhin ein Stickstoffstrom von 3,0 l/h eingespeist. Das Gemisch strömte dann durch eine 200 ml Kolonne, die mit Glaskugeln gefüllt ist. Danach wurde in einem weiteren Glaskolben das Gas durch Phasentrennung abgetrennt. Der gesamte Aufbau wurde bei Raumtemperatur und Atmosphärendruck betrieben.

Mittels einer Sauerstoffmesssonde wurde der gelöste Sauerstoffgehalt am Ausgang der Kolonne zu 35 ppm bestimmt.

Die Sauerstoffkonzentration im eingesetzten, unbehandelten Methanol betrug 70 ppm.

### Beispiel 1:

Mittels einer Pumpe wurden kontinuierlich 4 l/h Methanol in einen Glaskolben dosiert. In den Kolben wird über eine Fritte weiterhin ein Wasserstoffstrom von 1,0 1/h eingespeist. Das Gemisch strömte dann durch eine 200 ml Kolonne, die mit Glaskugeln gefüllt ist. Danach wurde in einem weiteren Glaskolben das überschüssige Gas durch Phasentrennung abgetrennt. Das wasserstoffhaltige Methanol wurde dann mittels einer Pumpe mit 4 l/h in einen Festbettreaktor, der mit 70 g Katalysator (0,5 Gew.-% Pd auf γ-Al₂O₃) gefüllt war, gefördert. Der gesamte Aufbau wurde bei Raumtemperatur und Atmosphärendruck betrieben.

Mittels einer Sauerstoffmesssonde wurde der gelöste Sauerstoffgehalt am Ausgang des Reaktors zu 80 ppb bestimmt. Die Sauerstoffkonzentration im eingesetzten, unbehandelten Methanol betrug hingegen 70 ppm.

Werden 200 ml des von gelöstem Sauerstoff befreiten Methanols mit 7 g Schwefelwasserstoff durchströmt, so konnte danach mittels HPLC-Analytik kein elementarer Schwefel detektiert werden (< 1 ppm). Bei Verwendung des unbehandelten Methanols bildeten sich hingegen mehr als 40 ppm elementaren Schwefels.

### Beispiel 2:

Beispiel 1 wurde mit einem Strom von 5 l/h Methanol, das geringe Mengen an Verunreinigungen (Amine und Schwefelverbindungen) enthält, und 69,5 g eines Pd-haltigen Katalysators (Lewatit K3433, Bayer AG, auf Basis eines Ionenaustauscherharzes) wiederholt.

Mittels einer Sauerstoffmesssonde wurde der gelöste Sauerstoffgehalt am Ausgang des Reaktors zu 0 ppb bestimmt.

### Beispiel 3:

Beispiel 2 wurde mit modifiziertem Aufbau wiederholt. So wurde zum Eintrag des Wasserstoffs ein Fallfilmabsorber verwendet, wo das mit geringen Mengen an Verunreinigungen behaftete Methanol von oben nach unten in Form eines dünnen Films entlang der inneren Rohrwand in einer Wasserstoffatmosphäre strömte. Außerdem wurde auf einen Wasserstoffgasaustritt verzichtet.

Mittels einer Sauerstoffmesssonde wurde der gelöste Sauerstoffgehalt am Ausgang des Reaktors zu 0,5 ppb bestimmt .

### Beispiel 4:

Beispiel 1 wurde mit einem Strom von 5 1/h Cyclohexan wiederholt.

Mittels einer Sauerstoffmesssonde wurde der gelöste Sauerstoffgehalt am Ausgang des Reaktors zu 55 ppb bestimmt .

### Beispiel 5:

Beispiel 1 wurde mit einem Strom von 3 1/h Toluol wiederholt.

Mittels einer Sauerstoffmesssonde wurde der gelöste Sauerstoffgehalt am Ausgang des Reaktors zu 20 ppb bestimmt.

### Beispiel 6:

Beispiel 1 wurde mit einem Strom von 3 1/h Acrolein wiederholt.

Mittels einer Sauerstoffmesssonde wurde der gelöste Sauerstoffgehalt am Ausgang des Reaktors zu 100 ppb bestimmt .

### Beispiel 7:

Beispiel 1 wurde mit einem Strom von 3 l/h Aceton wiederholt.

Mittels einer Sauerstoffmesssonde wurde der gelöste Sauerstoffgehalt am Ausgang des Reaktors zu 50 ppb bestimmt.

## Patentansprüche

1. Verfahren zur katalytischen Entfernung von gelöstem Sauerstoff mit folgenden Verfahrensschritten
a) Eintragen des Reduktionsmittels Wasserstoff in die organische Flüssigkeit
b) Gegebenenfalls Entfernen des nicht löslichen Überschusses des Reduktionsmittels
c) Umsetzen des gelösten Sauerstoffs mit dem Reduktionsmittel an einem festen Hydrierkatalysator.

2. Verfahren gemäß Anspruch 1, **dadurch gekennzeichnet, dass** das Reduktionsmittel direkt über den Katalysator geleitet wird.

3. Verfahren gemäß Anspruch 1, **dadurch gekennzeichnet, dass** nicht mehr Reduktionsmittel zugegeben wird als sich in der organischen Flüssigkeit löst.

4. Verfahren gemäß Anspruch 1, **dadurch gekennzeichnet, dass** das Reduktionsmittel in der organischen Flüssigkeit absorbiert wird.

5. Verfahren gemäß Anspruch 1, **dadurch gekennzeichnet, dass** der Überschuss des Reduktionsmittels durch eine Phasentrennung gasförmig-flüssig abgetrennt wird.

6. Verfahren gemäß Ansprüche 1, **dadurch gekennzeichnet, dass** die Umsetzung des gelösten Sauerstoffs mit dem Reduktionsmittel in einem Festbett mit Katalysatorschüttung erfolgt.

7. Verfahren gemäß den Ansprüchen 1 bis 6, **dadurch gekennzeichnet, dass** die katalytische Entfernung des gelösten Sauerstoffs bei Raum- oder Umgebungstemperatur stattfindet.

8. Verfahren gemäß den Ansprüchen 1 bis 7, **dadurch gekennzeichnet, dass** das Verfahren kontinuierlich betrieben wird.

9. Verfahren gemäß den Ansprüchen 1 bis 8, **dadurch gekennzeichnet, dass** es sich bei dem Katalysator um einen edelmetallhaltigen Feststoff handelt.

10. Verfahren gemäß den Ansprüchen 1 bis 9, **dadurch gekennzeichnet, dass** es sich bei dem Katalysator um einen Pd-haltigen Feststoff handelt.

11. Verfahren gemäss den Ansprüchen 1 bis 10, **dadurch gekennzeichnet, dass** es sich bei der organischen Flüssigkeit um organische Lösemittel oder ein Gemisch dieser handelt .

12. Verfahren gemäss den Ansprüchen 1 bis 11, **dadurch gekennzeichnet, dass** es sich bei der organischen Verbindung um Methanol handelt.

13. Verfahren gemäß den Anspruch 1, **dadurch gekennzeichnet, dass** man die von gelöstem Sauerstoff im wesentlichen befreite organische Flüssigkeit mit schwefelhaltigen anorganischen oder organischen Verbindungen oder diesen enthaltenen Gemischen in Kontakt bringt.

## Claims

1. Process for catalytic removal of dissolved oxygen comprising the steps of
a) introducing the reducing agent hydrogen into the organic liquid,
b) removing if appropriate the non-soluble excess of the reducing agent,
c) reacting the dissolved oxygen with the reducing agent over a solid hydrogenation catalyst.

2. Process according to Claim 1, **characterized in that** the reducing agent is routed directly over the catalyst.

3. Process according to Claim 1, **characterized in that** the amount of reducing agent added is not more than the amount which dissolves the organic liquid.

4. Process according to Claim 1, **characterized in that** the reducing agent is absorbed in the organic liquid.

5. Process according to Claim 1, **characterized in that** the excess of the reducing agent is separated off by a gaseous-liquid phase separation.

6. Process according to Claim 1, **characterized in that** the reaction of the dissolved oxygen with the reducing agent is carried out in a fixed bed of catalyst.

7. Process according to Claims 1 to 6, **characterized in that** the catalytic removal of the dissolved oxygen takes place at room or ambient temperature.

8. Process according to Claims 1 to 7, **characterized in that** the process is operated continuously.

9. Process according to Claims 1 to 8, **characterized in that** the catalyst comprises a noble metal containing solid material.

10. Process according to Claims 1 to 9, **characterized in that** the catalyst comprises a Pd-containing solid material.

11. Process according to Claims 1 to 10, **characterized in that** the organic liquid comprises organic solvents or a mixture thereof.

12. Process according to Claims 1 to 11, **characterized in that** the organic compound comprises methanol.

13. Process according to Claim 1, **characterized in that** the organic liquid essentially freed of dissolved oxygen is brought into contact with sulphur-containing inorganic or organic compounds or mixtures comprising these.

## Revendications

1. Procédé d'élimination catalytique d'oxygène dissous comportant les étapes de procédé suivantes .
a) introduction de l'hydrogène de l'agent réducteur dans le liquide organique,
b) éventuellement, élimination de l'excédent non soluble de l'agent réducteur,
c) mise en réaction de l'oxygène dissous avec l'agent réducteur sur un catalyseur d'hydrogénation solide.

2. Procédé selon la revendication 1, **caractérisé en ce que** l'agent réducteur est dirigé directement sur le catalyseur.

3. Procédé selon la revendication 1, **caractérisé en ce que** l'on n'ajoute pas plus d'agent réducteur qu'il ne s'en dissout dans le liquide organique.

4. Procédé selon la revendication 1, **caractérisé en ce que** l'agent réducteur est absorbé dans le liquide organique.

5. Procédé selon la revendication 1, **caractérisé en ce que** l'excédent d'agent réducteur est séparé par une séparation de phases gazeuse-liquide.

6. Procédé selon la revendication 1, **caractérisé en ce que** la mise en réaction de l'oxygène dissous avec l'agent réducteur est effectuée dans un lit solide avec apport de catalyseur.

7. Procédé selon l'une des revendications 1 à 6, **caractérisé en ce que** l'élimination catalytique de l'oxygène dissous est effectuée à température ambiante

8. Procédé selon l'une des revendications 1 à 7, **caractérisé en ce que** le procédé est mené en continu.

9. Procédé selon l'une des revendications 1 à 8, **caractérisé en ce que** le catalyseur est une matière solide contenant un métal noble.

10. Procédé selon l'une des revendications 1 à 9, **caractérisé en ce que** le catalyseur est une matière solide contenant du Pd.

11. Procédé selon l'une des revendications 1 à 10, **caractérisé en ce que** le liquide organique est un solvant organique ou un mélange de solvants organiques.

12. Procédé selon l'une des revendications 1 à 11, **caractérisé en ce que** le composé organique est du méthanol.

13. Procédé selon la revendication 1, **caractérisé en ce que** l'on met en contact le liquide organique essentiellement libéré de l'oxygène dissous avec des composés inorganiques ou organiques contenant du soufre ou des mélanges contenant ceux-ci.
